Europäisches Patentamt

European Patent Office

Office européen des brevets

(11) Publication number: **0 280 847**
**A1**

## EUROPEAN PATENT APPLICATION

(21) Application number: **88100501.1**

(22) Date of filing: **15.01.88**

(51) Int. Cl.⁴: **B60C 11/01**

(30) Priority: **26.01.87 JP 13959/87**

(43) Date of publication of application:
**07.09.88 Bulletin 88/36**

(84) Designated Contracting States:
**DE FR GB LU**

(71) Applicant: **THE YOKOHAMA RUBBER CO., LTD.**
**36-11, Shimbashi 5-chome Minato-ku**
**Tokyo, 105(JP)**

(72) Inventor: **Kabe, Kazuyuki**
**15-1, Ikejiri 4-chome**
**Setagaya-ku Tokyo(JP)**
Inventor: **Koishi, Masataka**
**28-1, Minamihara 1-chome**
**Hiratsuka-shi Kanagawa-ken(JP)**
Inventor: **Takahashi, Ken**
**Atsugi Riverside 4-25 2374, Okada**
**Atsugi-shi Kanagawa-ken(JP)**

(74) Representative: **Weber, Dieter, Dr. et al**
**Dr. Dieter Weber und Dipl.-Phys. Klaus**
**Seiffert Patentanwälte**
**Gustav-Freytag-Strasse 25 Postfach 6145**
**D-6200 Wiesbaden 1(DE)**

(54) **Pneumatic radial tire.**

(57) A radial tire having a narrow groove extending in the circumferential direction of the tire and provided in each of both shoulder portions of the surface of a tread, wherein when the depth of said narrow groove as determined in the radial direction of the tire, the distance between the internal edge on said shoulder side of an opening portion of said narrow groove and the outside surface of said shoulder portion as determined parallel to the surface of said tread, and the distance between the internal wall surface on the shoulder side of the bottom of said narrow groove and the outside surface of said shoulder portion as determined parallel to the surface of said tread are expressed by h, $d_1$, and $d_2$, respectively, $d_1$ is less than 15 mm, provided that $d_1$ is smaller than $d_2$, and a shape factor, m, defined by the following equation is 0.8 to 1.2:

FIG.1

$$m = \frac{d_2 - d_1}{h}$$

## PNEUMATIC RADIAL TIRE

This invention relates to a pneumatic radial tire. More particularly, the present invention is concerned with a radial tire having a wandering preventing performance which is suitable for use in heavy vehicles, such as trucks and buses.

In recent years, radial tires have been used in heavy load vehicles, such as trucks and buses as well, because of excellent high-speed performance and wear resistance and low fuel consumption thereof. In the radial tires for use in such heavy-load vehicles, since the reinforcing belt layer of the tread portion is generally made of a metallic cord in order to withstand a heavy load applied thereto, the tread portion has a very high rigidity.

However, the high rigidity of the tread portion of the above-mentioned heavy-load radial tire is further increased as a result of the use of the radial tire in such a state that it is filled with a high-pressure air, which tends to cause a problem with respect to the occurrence of the so-called wandering phenomenon when the tire travels on a "rutted" road having recesses on its surface. That is, when the above-mentioned radial tire having a high rigidity is urged to pass over a rut during the travelling in the rut, an excessive lateral force is applied to the tire from the surface of the road, which leads to the failure in the control of a steering wheel, i.e., causes the wandering phenomenon.

Since camber thrust is a major causative factor of the wandering phenomenon, tires having a narrow groove provided in both the shoulder portions along the circumferential direction of the tire were proposed in order to prevent this phenomenon. In this expedient, the narrow groove is provided in order to decrease the shear rigidity of the shoulder portion relative to the lateral force, which relaxes the external force, thus contributing to the elimination of the failure in the control of a steering wheel.

However, the studies conducted by the present inventors revealed that the above-mentioned provision of a narrow groove in the shoulder portion tended to bring about the cracking at the bottom of the narrow groove along the circumferential direction of the tire when the narrow groove was located near the end portion of the shoulder. Further, it was found that, when the narrow groove was provided near the central portion of the tread for the purpose of preventing the occurrence of the above-mentioned cracking, the tread development width later to be described was substantially lowered, which led to another problem that the wear resistance was lowered.

An object of the present invention is to provide a pneumatic radial tire having a wandering phenomenon preventing performance which has a narrow groove provided in the shoulder portions along the circumferential direction of the tire.

Another object of the present invention is to provide a pneumatic radial tire suitable particularly for heavy duty applications which has improved wear resistance and resistance to the occurrence of the cracking in the narrow groove while enjoying an excellent wandering phenomenon preventing performance derived from the provision of a narrow groove in the shoulder portion.

In order to attain the above-mentioned objects, a fundamental structure of the pneumatic radial tire of the present invention comprises a reinforcing belt layer composed of metallic cords and provided in a tread portion and a narrow groove extending in the circumferential direction of the tire which is provided in each of left and right shoulder portions of the surface of the tread. The radial tire of the present invention having the above-mentioned fundamental structure is characterized in that when the depth of the narrow groove as determined in the radial direction of the tire, the distance between the internal edge on the shoulder side of an opening portion of the narrow groove and the outside surface of the shoulder portion as determined parallel to the surface of the tread, and the distance between the internal wall surface on the shoulder side of the bottom of the narrow groove and the outside surface of the shoulder portion as determined parallel to the surface of the tread are expressed by h, $d_1$, and $d_2$, respectively, $d_1$ is less than 15 mm ($d_1 < 15$ mm), provided that $d_1$ is smaller than $d_2$ ($d_1 < d_2$), and a shape factor, m, defined by the following equation is 0.8 to 1.2:

$$m = \frac{d_2 - d_1}{h} \qquad (1)$$

When the above-mentioned requirements with respect to the structure of the narrow groove are met, the occurrence of the cracking at the bottom of the narrow groove can be suppressed without causing any lowering in the wear resistance of the tread portion while maintaining the wandering phenomenon

2

preventing performance derived from the provision of the narrow groove.

The Drawings

FIG. 1 is a sectional view of a half portion of a pneumatic radial tire embodying the present invention, showing essential parts in the tread portion of the tire;

FIG. 2 is a plan view of the tread portion of the pneumatic radial tire shown in FIG. 1; and

FIG. 3 is a graph, showing the wear resistance (A) and the extent of the growth of the cracking (B) with respect to the tire of the present invention, comparative tires, and a conventional tire.

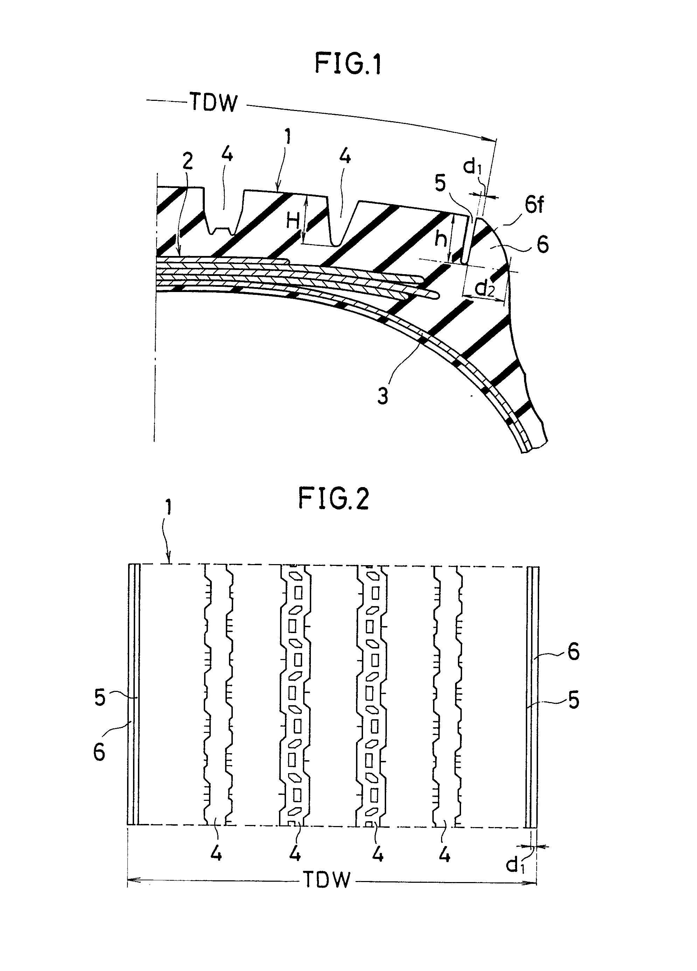

FIGS. 1 and 2 show an example of a heavy duty radial tire according to the present invention. In these drawings, numeral 1 designates tread portion, numeral 2 a reinforcing belt circularly provided in the circumferential direction of the tread portion, and numeral 3 a carcass. The carcass 3 has a structure comprising one or more layers and is made of metallic cords, such as steel, or organic fiber cords provided at an angle of about 90° to the circumferential direction of the tire. The reinforcing belt 2 has a tension-resistant layer having a structure comprising at least two layers as the main structural portion thereof. If necessary, the reinforcing belt 2 further has a reinforcing layer having a single-layer structure provided between the tension resistant layer and the carcass 3. The reinforcing cords of the tension-resistant layer are each composed mainly of a metallic cord, such as steel, and provided in such a manner that they make an angle of 15° to 30° with the circumferential direction of the tire and cross each other between the adjacent layers. On the other hand, the reinforcing cords of the reinforcing layer are each composed of a metallic cords as in the reinforcing cords of the tension-resistant layer and are disposed in such a manner that they make an angle of 40° to 75° with the circumferential direction of the tire and cross the reinforcing cords of the tension resistant layer.

The contact area of the tread portion 1, i.e. the tread surface, is provided with a plurality of main grooves 4, ....., 4 (four main grooves in this example) in the circumferential direction of the tire and has a tread pattern based on a rib pattern formed thereon. Both the shoulder portions of the tread portion 1 are each provided with a narrow groove 5 along the circumferential direction of the tire. A shoulder rib 6 is formed in the outside of the narrow groove 5. The outside surface 6f of the cross section of the shoulder rib 6 has a surface curved in a parabolic or arcuated form.

With respect to the radial tire of the present invention having the above-mentioned tread structure, the width of the shoulder rib 6 relative to the tread development width, TDW, of the contact area is as follows. Specifically, the distance, $d_1$, between the internal edge on the shoulder side of an opening portion of the narrow groove 5 and the outside surface of the shoulder portion as determined parallel to the surface of the tread is less than 15 mm. Further, the distance, $d_1$, is smaller than the distance, $d_2$, between the internal wall surface on the shoulder side of the bottom of the narrow groove 5 and the outside surface of the shoulder portion as determined parallel to the surface of the tread (i.e., $d_1 < d_2$). Moreover, the shape factor, m, defined by the above-mentioned equation (1) using the distances, $d_1$ and $d_2$, and the depth, h, of the narrow groove 5 as determined in the radial direction of the tire is 0.8 to 1.2.

In the present invention, when the above-mentioned distance, $d_1$, exceeds 15 mm, the effective width of the contact area of the tread surface is too small, which causes a deterioration of the wear resistance. A further increase in this distance, $d_1$, leads to an insufficient decrease in the rigidity relative to the lateral force of the shoulder portion. This in turn lowers the wandering phenomenon preventing performance, which makes it impossible to attain the purpose of the present invention.

In the present invention, the distribution of the bending stress in the radial direction of the shoulder rib 6 can be approximated to the state of "a cantilever of uniform strength", so-called in the field of strength of materials, by setting the distance, $d_1$, between the opening portion of the narrow groove and the outside surface of the shoulder portion and the distance, $d_2$, between the bottom of the narrow groove and the outside surface of the shoulder portion so as to have the following relationship: $d_1 < d_2$, and, at the same time, setting the shape factor, m, defined by the above-mentioned equation (1) at 0.8 to 1.2. That is, the bending stress of the shoulder rib in the case where the lateral force is applied to the shoulder rib 6 can be substantially uniformly distributed from the tread surface to the bottom of the narrow groove. Therefore, approximating the shoulder rib 6 to the state of a cantilever of uniform strength leads to the relaxation of the concentration of the stress on the bottom of the narrow groove 5, which contributes to the prevention of the cracking caused at the bottom of the narrow groove along the circumferential direction of the tire.

In order to further approximate the shoulder rib to the state of a cantilever of uniform strength, it is most desirable that the shoulder rib be formed so that the cross section of the outside surface 6f of the shoulder rib has a surface curved in a parabolic form. However, the cross section of the outside surface 6f may have an arcuated shape or a taper shape as far as a state similar to the state of a cantilever of uniform strength can be attained.

When the shape factor, m, is less than 0.8, the stress tends to concentrate on the bottom of the narrow groove, which not only brings about the occurrence of the cracking along the circumferential direction of the tire but also deteriorates the wear resistance. On the other hand, when the shape factor, m, exceeds 1.2, the rigidity of the shoulder rib 6 is too large, which leads to the lowering in the wandering phenomenon preventing performance.

In the present invention, the cross section of the bottom of the narrow groove may have any shape. However, in order to avoid the concentration of the stress, it is preferred that the cross section of the bottom of the narrow groove have a round shape, such as U-shape. Further, the width of the narrow groove may have any value as far as the width provides a shape of a narrow groove and is preferably 1 to 5 mm, more preferably 2 to 3 mm. The depth, h, of the narrow groove with the wandering phenomenon preventing performance is preferably substantially equal to the depth, H, of the main groove 4, more preferably $0.7H < h < 1.0H$. A generally suitable depth, h, of the narrow groove is about 15 mm.

Example:

Four kinds of radial tires, i.e., a tire of the present invention, comparative tires A and B, and a conventional tire, each having a tire size of 10.00R20 14PR, were manufactured. In all the tires, the carcass was formed so as to have a single-layer structure composed of a steel cord layer, and the reinforced belt was formed so as to have four layer structure composed of steel cord layers. Further, the tread pattern of each tire was formed in such a manner that four main grooves were provided according to FIG. 2 and narrow grooves were provided in the shoulder portions. The dimensions, $d_1$, $d_2$, and h, of the narrow grooves of the individual tires were varied as shown in the following table.

## Table

| tire | h | $d_1$ | $d_2$ | m |
|------|-----|------|------|------|
| tire of the present invention | 15 mm | 1.5 mm | 14 mm | 0.83 |
| comp. tire A | 15 | 2.0 | 9 | 0.46 |
| comp. tire B | 15 | 2.0 | 22 | 1.33 |
| conventional tire | 15 | 16.0 | 22 | 0.40 |

These four kinds of radial tires were subjected to the following wear resistance evaluation tests and crack resistance tests with respect to the narrow grooves.

[Wear Resistance Evaluation Test]

The tires to be examined were mounted on a steering axis of an actual truck, and the truck was travelled on an ordinary road by about 50,000 km under the following conditions: internal pressure of the tire of 7.25 kg/cm² and load applied to the tire of about 2450 kg. Thereafter, the extent of the wear caused was determined.

4

[Crack Resistance Test]

The tires to be examined were preparatively thermally deteriorated by heating at 100° C for 2 weeks. Then, the tires were each run on an indoor drum tester (diameter: 1707 mm) for 100 hr under the following conditions: An internal pressure of the tire of 7.25 kg/cm$^2$, load applied to the tire of about 2200 kg, speed of 45 km/hr, and a slip angle of ± 2° (cyclic variation). Thereafter, the tires were examined with respect to the occurrence of the cracking at the bottom of the narrow grooves.

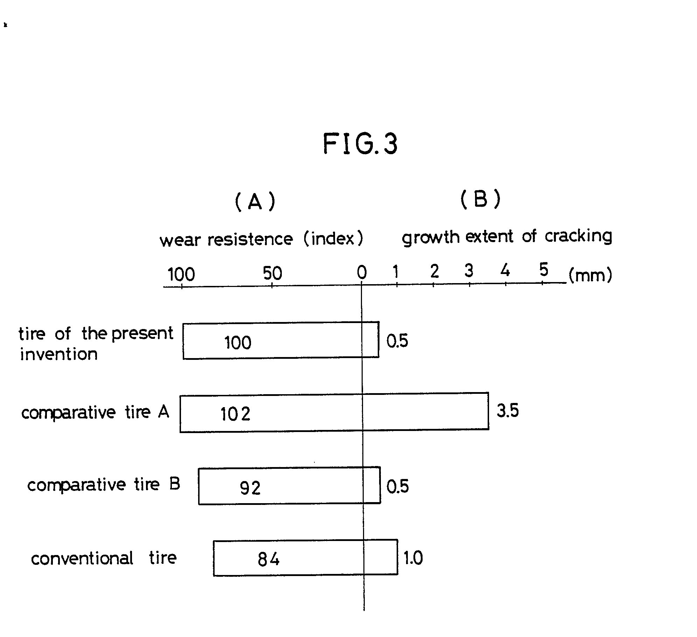

The values obtained in the wear resistance evaluation test were each expressed in terms of an index by taking the value with respect to the tire of the present invention as 100. The results are shown in graph A given on the left side of FIG. 3. As can be seen from graph A, the tire of the present invention exhibited a wear resistance by about 16% better than that of the conventional tire.

The results of the crack resistance test are shown in graph B given on the right side of FIG. 3. As can be seen from graph B, the tire of the present invention caused only slight wrinkling (depth of the growth of the crack: about 0.5 mm). On the other hand, in the conventional tire, the wrinkle was grown into a crack along the circumferential direction of the tire, and the depth of the growth of the crack reached about 1 mm. Further, in comparative tire A, the occurrence of an evident crack was observed at the bottom of the groove, and the depth of the growth reached about 3.5 mm.

Further, the four kinds of radial tires were each mounted on a steering axis of an actual truck and then subjected to the evaluation on the wandering phenomenon preventing performance. As a result, it was found that the tire of the present invention and comparative tire A gave little or no resistance to the steering wheel when the truck passes over a rut, i.e., exhibited an excellent wandering phenomenon preventing performance. On the other hand, comparative tire B gave a great resistance to the steering wheel, i.e. was poor in the wandering phenomenon preventing performance. Although the resistance to the steering wheel of the conventional tire was smaller than that of comparative tire B, the wandering phenomenon preventing performance of the conventional tire was slightly inferior to that of the tire of the present invention.

As is apparent from the foregoing description, according to the present invention, the improvement in the wear resistance and the crack resistance of the narrow grooves of a radial tire can be attained without spoiling the wandering phenomenon preventing performance derived from the provision of the narrow grooves through the setting of the distance, $d_1$, between the opening portion of the narrow groove provided in the shoulder portion and the outside surface of the shoulder portion and the distance, $d_2$, between the bottom of the narrow groove provided in the shoulder portion and the outside surface of the shoulder portion so as to satisfy a particular requirement and setting of a shape factor, m, specified from the distances, $d_1$ and $d_2$, and the depth of the groove, h, in a particular range.

## Claims

1. A pneumatic radial tire comprising a reinforcing belt layer composed of metallic cords and disposed in a tread portion and a narrow groove extending in the circumferential direction of the tire and provided in each of left and right shoulder portions of the surface of said tread, wherein when the depth of said narrow groove as determined in the radial direction of the tire, the distance between the internal edge on said shoulder side of an opening portion of said narrow groove and the outside surface of said shoulder portion as determined parallel to the surface of said tread, and the distance between the internal wall surface on the shoulder side of the bottom of said narrow groove and the outside surface of said shoulder portion as determined parallel to the surface of said tread are expressed by h, $d_1$, and $d_2$, respectively, $d_1$ is less than 15 mm, provided that $d_1$ is smaller than $d_2$, and a shape factor, m, defined by the following equation is 0.8 to 1.2:

$$m = \frac{d_2 - d_1}{h}.$$

2. A pneumatic radial tire according to claim 1, wherein said reinforcing belt composed of metallic cords comprises at least two tension-resistant layers and a single reinforcing layer, said tension-resistant layers making an angle of 15° to 30° with the circumferential direction of the tire and comprising metallic cords which are disposed so that they cross each other between the adjacent layers, said reinforcing layer comprising metallic cords making an angle of 40° to 75° with the circumferential direction of the tire.

3. A pneumatic radial tire according to claim 1, wherein said tread has a tread pattern formed based on a rib pattern comprising a plurality of main grooves extending in the circumferential direction of the tire.

4. A pneumatic radial tire according to claim 1, wherein the width of said narrow groove is 1 to 5 mm.

5. A pneumatic radial tire according to claim 3, wherein the width of said narrow groove is 1 to 5 mm.

6. A pneumatic radial tire according to claim 5, wherein the depth, h, of said narrow groove and the depth, H, of said main groove have the following relationship: $0.7H < h < 1.0H$.

0 280 847

FIG.1

FIG.2

# FIG.3

(A)          (B)

wear resistence (index)     growth extent of cracking

100       50       0   1   2   3   4   5   (mm)

tire of the present invention — 100 — 0.5

comparative tire A — 102 — 3.5

comparative tire B — 92 — 0.5

conventional tire — 84 — 1.0

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 118 910 (MICHELIN RECHERCHE ET TECHNIQUE)<br>* Page 1, lines 37-53; page 2, lines 27-43; figure 1 *<br>--- | 1,3-6 | B 60 C 11/01 |
| A | DE-A-2 818 071 (BRIDGESTONE TIRE CO.)<br>* Page 7, paragraph 2; page 11, last paragraph - page 12, paragraph 2; figure 5 *<br>--- | 1,3 | |
| A | PATENT ABSTRACTS OF JAPAN, vol. 10, no. 342 (M-536)[2398], 19th November 1986;<br>& JP-A-61 143 204 (YOKOHAMA RUBBER CO., LTD.) 30-06-86<br>----- | 2 | |

|  |  |
|---|---|
|  | TECHNICAL FIELDS SEARCHED (Int. Cl.4)<br><br>B 60 C 11/00 |

The present search report has been drawn up for all claims

| Place of search | Date of completion of the search | Examiner |
|---|---|---|
| THE HAGUE | 26-05-1988 | THEODORIDOU E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)